# EUROPÄISCHE PATENTSCHRIFT

(11) **EP 1 931 534 B1**
(45) Veröffentlichungstag und Bekanntmachung des Hinweises auf die Patenterteilung: **11.11.2009**
(21) Anmeldenummer: 06792813.5
(22) Anmeldetag: 14.08.2006
(51) Int. Cl.: B60N 2/44, B60N 2/02, F16H 25/20

(54) **GETRIEBE-ANTRIEBSEINHEIT MIT EINEM AUFNAHMEMODUL, INSBESONDERE ZUM VERSTELLEN EINES BEWEGLICHEN TEILS IM KRAFTFAHRZEUG**
TRANSMISSION DRIVE UNIT COMPRISING A RECEIVING MODULE, ESPECIALLY FOR ADJUSTING A MOBILE PART IN THE MOTOR VEHICLE
UNITE DE TRANSMISSION ET D'ENTRAINEMENT MUNIE D'UN MODULE DE RECEPTION, SERVANT NOTAMMENT A DEPLACER UNE PARTIE MOBILE D'AUTOMOBILE

(30) Priorität: 28.09.2005 DE 102005046356
(43) Veröffentlichungstag der Anmeldung: 18.06.2008
(73) Patentinhaber: ROBERT BOSCH GMBH, 70442 Stuttgart (DE)
(72) Erfinder: OBERLE, Hans-Juergen, 76437 Raststatt (DE); LIENIG, Andreas, 77815 Buehl (DE)
(86) Internationale Anmeldenummer: PCT/EP2006/065292
(87) Internationale Veröffentlichungsnummer: WO 2007/036389

(56) Entgegenhaltungen:
- EP-A2- 0 759 374
- EP-A2- 1 223 073
- WO-A-2004/028305
- WO-A-2006/024598
- DE-C1- 4 101 470

## Beschreibung

### Stand der Technik

Die Erfindung betrifft eine Getriebe-Antriebseinheit mit einem Aufnahmemodul, insbesondere zum Verstellen eines beweglichen Teils im Kraftfahrzeug, nach der Gattung der unabhängigen Ansprüche.

Mit der EP 0 759 374 A2 ist eine Vorrichtung zum Verstellen eines Sitzes im Kraftfahrzeug bekannt geworden, die gegenüber dem Normalbetrieb erheblich größere Kräfte aufnehmen kann. Solche Kräfte können beispielsweise durch einen Verkehrsunfall verursacht werden. Hierbei ist es wichtig, dass der Fahrzeugsitz fest mit der Karosserie verbunden bleibt, um die Funktion der vorgesehenen Schutzmaßnahmen für die Fahrzeuginsassen (Sicherheitsgurt, Airbag) zu gewährleisten. Bei obiger Vorrichtung ist eine Gewindemutter, die eine Gewindespindel aufnimmt, fest mit der Karosserie verbunden. Die Gewindespindel wird über ein Schneckengetriebe von einem Elektromotor angetrieben, der seinerseits fest mit dem Sitz verbunden ist. Das Getriebegehäuse des Schneckengetriebes ist aus Kunststoff gefertigt und über ein weiteres Gehäuseteil mit dem Antriebsmotor verbunden. Wird der Antriebsmotor betätigt, dreht sich die Gewindespindel und verschiebt das Getriebegehäuse einschließlich Antriebsmotor und Sitz gegenüber der Gewindemutter. Um beispielsweise bei einem Auffahrunfall das Losreißen des Getriebegehäuses von der Gewindespindel zu verhindern, ist ein zusätzliches metallisches, u-förmiges Stützteil vorgesehen, das das Getriebegehäuse über einen gelenkigen Befestigungsbolzen als Befestigungsvorrichtung mit dem Antriebsmotor und somit mit dem Sitz verbindet. Kann das Getriebegehäuse aus Kunststoff dem hohen Kraftfluss nicht standhalten, wird es mittels einer zusätzlichen Gewindemutter durch das metallische Stützteil gehalten. Nachteil dieser Ausführung ist, dass bei einer Änderung der Kunden-Schnittstelle zur Befestigung der Getriebe-Antriebseinheit das komplette Getriebegehäuse einschließlich der aufwendigen Stützkonstruktion umkonstruiert werden muss, um für jeden Kunden die gewünsche mechanische Schnittstelle zu Verfügung zu stellen. Außerdem beansprucht die Anformung des Anschraubauges für den Gelenkbolzen Bauraum in axialer Richtung zur Spindel, der bei vielen Anwendungen sehr begrenzt ist.

Mit der gattungsbildenden DE 4101470 C1 ist eine Verstelleinheit für Fahrzeugsitze bekannt geworden, bei der eine Spindel über ein Schneckengetriebe angetrieben wird. Dabei ist die Schnecke und das Schneckenrad in einem topfförmigen Getriebegehäuse gelagert. Zur Verbindung des Getriebegehäuses mit dem Fahrzeugsitz können in gegenüber liegend angeordneten Gewindebohrungen des Getriebegehäuses Schwenkzapfen eingeschraubt werden.

Die WO 2004/028305 A1 zeigt einen elektromotorischen Möbelantrieb, bei dem ein Elektromotor über ein Schneckengetriebe eine Spindel in Drehung versetzt. Die Spindel ist in einer Profilschiene gelagert, die zu dessen Befestigung an den Möbeln Bohrungen aufweist.

### Vorteile der Erfindung

Die erfindungsgemäße Getriebe-Antriebseinheit und deren erfindungsgemäßes Herstellungsverfahren mit den Merkmalen der unabhängigen Ansprüche haben den Vorteil, dass durch die Anordnung des Antriebsrads der Spindel in einem Trägerrohr eine separate standardisierte Baugruppe geschaffen wird, die unabhängig ist von einem Getriebegehäuse oder dem Antriebsaggregat. Durch den Verzicht auf ein herkömmliches Getriebegehäuse, bei dem das Abtriebselement des Antriebsaggregats und das Antriebsrad der Spindel gemeinsam in einem geschlossenen Gehäuse angeordnet sind, kann die Getriebe-Antriebseinheit als modulares Baukastensystem sehr flexibel an unterschiedliche Befestigungsvorrichtungen der kundenspezifischen Anwendungen angepasst werden. Dabei kann immer die gleiche vormontierte Baugruppe mit dem Standard-Trägerrohr verwendet werden, wobei die mechanische Schnittstelle zur Befestigung der Getriebe-Antriebseinheit an der Karosserie oder an einem zu verstellenden Teil mittels eines kundenspezifischen Aufnahmemoduls für die Befestigungsvorrichtung nachträglich einfach variiert werden kann. Durch die Verwendung eines standardisierten Trägerrohrs, an dem nach Kundenwunsch unterschiedliche Aufnahmemodule befestigt werden, wird sehr kostengünstig eine sehr hohe Flexibilität des Spindelantriebs erzielt. Dabei kann das Aufnahmemodul vorteilhaft völlig unabhängig von der Montage der Spindel und deren Antriebsrad im Trägerrohr nachträglich an diesem angefügt werden. Die axiale Baulänge der Getriebe-Antriebseinheit kann durch eine Verkürzung des Trägerrohrs reduziert werden, da an das

Standard-Trägerrohr keine Aufnahme - beispielsweise eine radiale Bohrung für einen Befestigungsbolzen - angeformt werden muss. Weist das Aufnahmemodul beispielsweise eine kreisförmige Aussparung auf, kann das Aufnahmemodul sehr einfach auf der äußeren Umfangsfläche eines runden Trägerrohrs befestigt werden. Bei dieser Ausführung des Aufnahmemoduls als Außenring kann diese auch schon vor der Montage der Spindel auf das Trägerrohr montiert werden. In einer alternativen Ausführung ist das Aufnahmemodul innerhalb des Trägerrohrs an der inneren Wandfläche befestigt. Dabei kann das Aufnahmemodul als Innenring oder als komplette Scheibe ausgebildet sein, wobei das Aufnahmemodul gleichzeitig die Festigkeit des Trägerrohrs verstärkt. Die verschiedenartigen Aufnahmemodule können entsprechend der geforderten Schnittstellen-Anforderungen sehr einfach mit dem Standard-Trägerrohr verbunden werden.

Durch die in den Unteransprüchen aufgeführten Maßnahmen ergeben sich vorteilhafte Weiterbildungen und Verbesserungen der in den unabhängigen Ansprüchen angegebenen Merkmale.
Die ringförmige Ausführung des Aufnahmemoduls eignet sich auch besonders für eine durchtauchende Spindel, bei der die Spindel an beiden axialen Enden aus dem Trägerrohr heraus ragt.

Besonders einfach kann das Aufnahmemodul mit einem Gewinde in oder auf das Trägerrohr geschraubt werden. Dazu weist das Trägerrohr an seiner äußeren Umfangsfläche und/oder seiner Innenwand zumindest an einem axialen Endbereich ein entsprechendes Gewinde auf, das in ein korrespondierendes Gewindes des Aufnahmemoduls eingreift. Alternativ weist das Aufnahmemodul ein selbstfurchendes oder selbstschneidendes Gewinde auf, das bei der Montage in/auf das Trägerrohr in diesem ein entsprechendes Gegengewinde ausformt.

In einer alternativen Ausführung kann das Aufnahmemodul auch an das Trägerrohr geklebt, geschweißt, oder mittels Kaltumformung mit dem Trägerrohr verstemmt werden. Bei diesen Verbindungsmethoden können das Trägerrohr und das Aufnahmemodul auch von einem kreisrunden Querschnitt abweichen.

Befestigungsvorrichtung angreifenden Crash-Kräfte über den Befestigungsbolzen in der Aufnahme auf das Trägerrohr übertragen. Durch die Ausbildung der Befestigungsvorrichtung als Gelenkbolzen ist die Spindel gelenkig zwischen dem zu verstellenden Teil und der Karosserie gelagert, was einen höheren Freiheitsgrad der Verstellbewegung ermöglicht.

In einer weiteren Ausführung ist die Aufnahme des Aufnahmemoduls als zylindrischer Bolzen ausgebildet, der sich radial zur Spindel erstreckt. Damit ist praktisch an der Antriebs-Einheit schon ein gelenkiger Befestigungsbolzen angeformt, der sehr einfach mit der Karosserie oder dem Verstell-Teil drehbar verbunden werden kann.

Besonders günstig ist es, wenn das Aufnahmemodul in dem Trägerrohr axial soweit eingefügt wird, bis dieses axial am Lagerschild der Spindel anliegt. Dadurch kann das Axialspiel der Spindel mittels der Montage des Aufnahmemoduls eliminiert werden. Gleichzeitig werden axiale Druckkräfte, die auf die Spindel wirken, über das Lagerschild auf das Aufnahmemodul, und damit auf die Befestigungsvorrichtung der Karosserie übertragen, wodurch die Spindel mit ihrem Antriebsrad im Trägerrohr positioniert bleibt.

In einer vorteilhaften Ausgestaltung ist das Aufnahmemodul als Lagerschild mit einer topfförmigen Lageraufnahme ausgebildet, in der die Spindel radial und axial gelagert werden kann. Dadurch kann die Anzahl der Bauteile reduziert werden und gleichzeitig die axiale Baulänge des Trägerrohrs und damit der Getriebe-Antriebseinheit weiter verkürzt werden. Das Aufnahmemodul wird dazu insbesondere aus Kunststoff hergestellt, wodurch die Spindel, bzw. das Antriebsrad, direkt in dem als Lagerschild ausgebildeten Aufnahmemodul unter minimaler Reibung gelagert werden kann. Axial kann dieses Aufnahmemodul beispielsweise direkt mit einem kugelförmigen metallischen Axialanschlag der Spindel zusammenwirken. Durch die Ausbildung der Aufnahme aus Kunststoff kann die Reibung zur Befestigungsvorrichtung verringert werden und die Geräuschbildung reduziert werden.

Idealer Weise ist das Aufnahmelement derart ausgebildet und am Trägerrohr angeformt, dass die mechanische Festigkeit des Trägerrohrs dadurch verstärkt wird. Somit können beispielsweise auch Bereiche im Trägerrohr unterstützt werden, an denen Aussparungen - insbesondere für Aufnahmen von Befestigungsvorrichtungen oder zur Axialspieleinstellung der Spindel - ausgeformt sind.

In einer bevorzugten Ausführung stellt die im Trägerrohr gelagerte Spindel mit der Aufnahme für die Befestigungsvorrichtung eine erste vormonierte Baugruppe dar, die mittels einer Kopplungsvorrichtung sehr einfach mit einem standardisierten Antriebsaggregat, beispielsweise einem Elektromotor mit einer Ankerschnecke, gekoppelt werden kann. Dabei greift das Abtriebselement des Antriebsaggregats zur Kraftübertragung auf das Antriebsrad der Spindel durch eine entsprechende Aussparung im Trägerrohr. Da die Aussparung im Trägerrohr relativ klein ist, kann das Trägerrohr recht hohe Kräfte aufnehmen, ohne dass die Spindel aus dem Trägerrohr heraus gerissen wird. Bei dieser erfindungsgemäßen Getriebe-Antriebseinheit gibt es somit kein klassisches Getriebegehäuse, das das Abtriebselement des Antriebsaggregats und das Antriebsrad des Getriebes gemeinsam umfasst, sondern ein weitgehend geschlossenes Trägerrohr, gegenüber dem das Abtriebselement mittels der Kopplungsvornchtung fixiert wird. Zur Befestigung der Kopplungsvorrichtung sind am Trägerrohr beispielsweise weitere Ausformungen angeordnet, in die zu Fixierung ein entsprechendes Befestigungsmittel der Kopplungsvorrichtung eingreift. Dabei liegt das Antriebsaggregat mit seinem Abtriebselement komplett außerhalb des Kraftflusses, der bei einem Crash-Fall auftritt.

Das erfindungsgemäße Herstellungsverfahren nach dem unabhängigen Anspruch 13 hat den Vorteil, dass die Montage der Baugruppe mit dem Trägerrohr unabhängig von der Montage des Aufnahmemoduls erfolgt. Dadurch kann auf einfache Weise am Ende des Montageprozesses der Baugruppe mit dem Trägerrohr dieses mittels unterschiedlicher Aufnahmemodule bezüglich der Kunden-Schnittstelle variiert werden. Ein solches Baukastensystem, bei dem auch unterschiedliche Antriebsaggregate verwendet werden können, ist sehr kostengünstig und kundenfreundlich.

Kann das Aufnahmemodul bei dessen Montage gegenüber dem Trägerrohr verdreht werden, kann die Aufnahme mit einer kundenspezifischen Winkelposition auf dem Trägerrohr befestigt werden. Dadurch ist die Anordnung der Befestigungsvorrichtung unabhängig von der radialen Ausrichtung des Antriebsaggregats.

Die Aufnahmemodule können in ihrer Form, ihren Verbindungsmittel und ihrem Werkstoff sehr leicht variiert werden, ohne dass dadurch die Konstruktion und der Montageprozess der gesamten Getriebe-Antriebseinheit geändert werden müssen.

### Zeichnungen

In den Zeichnungen sind verschiedene Ausführungsbeispiele einer erfindungsgemäßen Getriebe-Antriebseinheit dargestellt und in der nachfolgenden Beschreibung näher erläutert. Es zeigen:
- Figur 1: ein Schnitt durch eine erfindungsgemäße Getriebe-Antriebseinheit,
- Figur 2: einen Schnitt einer weiteren separat montierbaren Baugruppe mit dem Trägerrohr,
- Figur 3: und 4 eine Ansicht und eine Schnittdarstellung eines weiteren Ausführungsbeispiels, und
- Figur 5: einen Schnitt einer weiteren erfindungsgemäßen Baugruppe

### Beschreibung

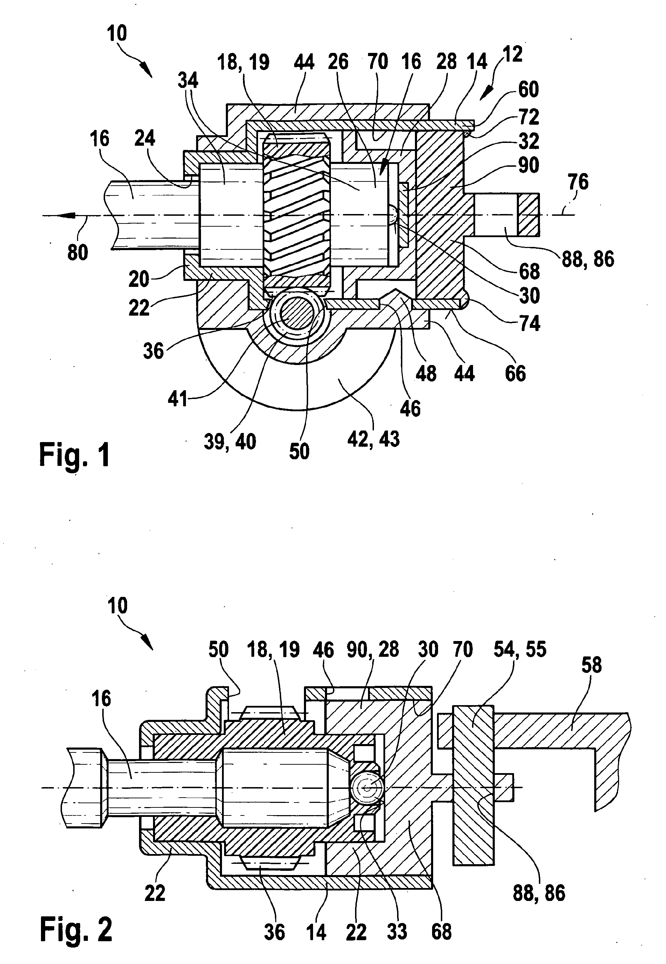

Die in Figur 1 dargestellte Getriebe-Antriebseinheit 10 besteht aus einer ersten Baugruppe 12, bei der in einem Trägerrohr 14 eine Spindel 16 mit einem darauf angeordneten Antriebsrad 18 gelagert ist. Das Trägerrohr 14 ist beispielsweise mittels Tiefziehen hergestellt und weist an einem Endbereich 20 eine topfförmige Lageraufnahme 22 für das Antriebsrad 18 auf. Die Spindel 16 ragt durch eine Öffnung 24 in der topfförmigen Lageraufnahme 22 aus dem Trägerrohr 14 heraus und ist beispielsweise über eine nicht dargestellte Gewindemutter mit der Karosserie verbunden. Bei diesem Ausführungsbeispiel befindet sich das andere Spindelende 26 innerhalb des Trägerrohrs 14 und wird axial und radial mittels eines Lagerschilds 28 gelagert, das innerhalb des Trägerrohrs 14 befestigt ist. Das Spindelende 26 weist beispielsweise eine kugelförmige Anlauffläche 30 auf, die axial in topfförmigen Lagerschild 28 anliegt. Optional kann im Lagerschild 28 eine Anlaufscheibe 32 mit erhöhter Festigkeit angeordnet werden. Das Antriebsrad 18 ist im Ausführungsbeispiel als Schneckenrad 19 ausgebildet, das zur radialen Lagerung axiale Fortsätze 34 aufweist. Das Antriebsrad 18 ist aus Kunststoff direkt auf die Spindel 16 aufgespritzt und weist eine Verzahnung 36 auf, die mit einem Abtriebselement 40 eines Antriebsaggregats 42 kämmt. Das Antriebsaggregat 42 ist als Elektromotor 43 ausgebildet und ist mittels einer Kopplungsvorrichtung 44 mit der ersten Baugruppe 12 verbunden. Das Trägerrohr 14 weist zur Positionierung gegenüber der Kopplungsvorrichtung 44 eine Ausformung 46 auf, in die ein entsprechendes Fixierelement 48 der Kopplungsvorrichtung 44 eingreift. Zur Übertragung des Drehmoments vom Antriebsaggregat 42 auf die separate Baugruppe 12 weist das Trägerrohr 14 eine radiale Aussparung 50 auf, in die das Abtriebselement 40 eingreift. Das Abtriebselement 40 ist beispielsweise als Schnecke 39 ausgebildet, die auf einer Ankerwelle 41 des Elektromotors 43 angeordnet ist.

Das Trägerrohr 14 bildet praktisch als Standardbauteil ein Gehäuse für die separate Baugruppe 12, an das verschiedene Aufnahmemodule 90 angeordnet werden können. Das in Figur 1 dargestellte Aufnahmemodul 90 weist eine als Anschraubauge 86 ausgebildete Aufnahme 88 auf, in die eine Befestigungsvorrichtung 54 - beispielsweise ein Gelenkbolzen 55 - einschiebbar ist. Die Aufnahme 88 ist hierbei mittig zum Trägerrohr 14 auf der Achse 76 angeordnet. Über diese Befestigungsvorrichtung 54 ist das Trägerrohr 14 beispielsweise gelenkig mit einem zu verstellenden Teil 58 im Kraftfahrzeug verbunden, beispielsweise ein nicht näher dargestellter Sitz oder ein Sitzteil, das gegenüber einem anderen Sitzteil verstellt wird. Das Aufnahmemodul 90 ist als kreisförmige Scheibe 68 ausgebildet, die an der Innenwand 70 des Trägerrohrs 14 anliegt. In der oberen Bild hälfte ist das Aufnahmemodul 90 beispielsweise mittels Schweißnähten 72 mit dem Trägerrohr 14 verbunden. Die untere Bildhälfte zeigt eine alternative Befestigung des Aufnahmemoduls 90 mittels einer Verstemmung 74 durch plastische Materialumformung.

Wirkt nun bei einem Auffahrunfall in axialer Richtung 76 eine Zugkraft 80 auf die Spindel 16 ein, wird die Spindel 16 über das Antriebsrad 18 in der topfförmigen Lageraufnahme 22 des Trägerrohrs 14 abgestützt. Die Zugkraft 80 wird über das Trägerrohr 14 auf das Aufnahmemodul 90 mit der Aufnahme 88 übertragen. Das Aufnahmemodul 90 ist im Ausführungsbeispiel aus einem gehärteten Stahl hergestellt, so dass dieses sehr hohe Kräfte 80 aufnehmen kann und über die Befestigungsvorrichtung 54 an Karosserie oder das Verstell-Teil 58 abführen kann. Dadurch bleibt das Spindelende 26 und damit das zu verstellende Teil 58 auch im Crash-Fall an seinem bestimmungsgemäßen Ort.

In Figur 2 ist ein weiteres Ausführungsbeispiel eines erfindungsgemäßen Spindelantriebs 10 dargestellt, bei dem das Aufnahmemodul 90 gleichzeitig als Lagerschild 28 für die radiale und axiale Lagerung der Spindel 16 im Trägerrohr 14 ausgebildet ist. Das Aufnahmemodul 90 weist hierzu eine topfförmige Lageraufnahme 22 auf, in der ein Fortsatz 34 des Antriebsrads 18 radial anliegt. Der axiale Anlauf der Spindel 16 wird durch eine Metallkugel 30 gebildet, die hier axial direkt an einer Bodenfläche 33 der topfförmigen Lageraufnahme 22 des Aufnahmemoduls 90 anliegt. Das Aufnahmemodul 90 ist hierbei aus Kunststoff gefertigt, sodass eine minimale Reibung zwischen der Spindel 16 und dem Aufnahmemodul 90 auftritt. Am Aufnahmemodul 90 ist wiederum einstückig eine Aufnahme 88 angeformt, die als Auge 86 ausgebildet ist. In die Aufnahme 88 ist als Befestigungsvorrichtung 54 der Gelenkbolzen 55 eingeschoben, der den Spindelantrieb 10 gelenkig mit einem zu verstellenden Teil 58 verbindet, das nur schematisch dargestellt ist. Das Aufnahmemodul 90 liegt hier über seine gesamte axiale Ausdehnung an der Innenwand 70 des Trägerrohrs 14 an, und ist beispielsweise mittels Kleben in diesem fixiert. Durch den Verzicht auf ein separates Lagerschild 28 ist hierbei die axiale Baulänge des Trägerrohrs 14 gegenüber der Ausführung in Figur 1 reduziert.

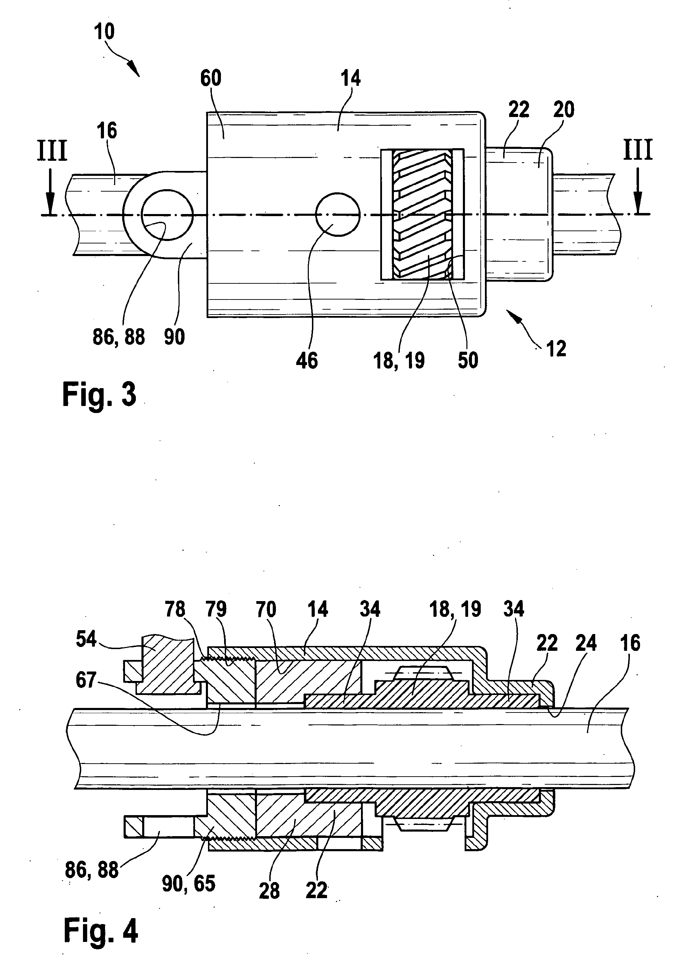

In Figur 3 und Figur 4 ist eine weitere Variation der Erfindung dargestellt, bei der im Trägerrohr 14 eine durchtauchende Spindel 16 gelagert ist, die an beiden Ende 20, 60 aus dem Trägerrohr 14 ragt. Die Spindel 16 ist über das Antriebsrad 18 und dessen axiale Fortsätze 34 auf der einen Seite direkt in der topfförmigen Lageraufnahme 22 des Trägerrohrs 14 gelagert, wobei die Spindel 16 die Öffnung 24 im Trägerrohr 14 durchdringt. Auf der gegenüber liegenden Seite ist das Antriebsrad 18 in der topfförmigen Lageraufnahme 22 eines separaten Lagerschilds 28 gelagert, das an der Innenseite 70 des Trägerrohrs 14 anliegt. Das Aufnahmemodul 90 ist bei dieser Ausführung als Innenring 65 ausgebildet, dessen zentraler Durchbruch 67 von der Spindel 16 durchdrungen wird. Das Aufnahmemodul 90 weist hierbei als Aufnahme 88 zwei Augen 86 auf, die beidseitig der Spindel 16 angeordnet sind. In diese Aufnahmen 88 greift eine Befestigungsvorrichtung 54, die beispielsweise als Nietverbindung ausgebildet ist, und die Getriebe-Antriebseinheit 10 mit dem zu verstellenden Teil 58 oder mit der Karosserie verbindet. Das Aufnahmemodul 90 weist ein Gewinde 78 auf, das in ein Gegengewinde 79 des Trägerrohrs 14 greift, wodurch das Aufnahmemodul 90 formschlüssig am Trägerrohr 14 befestigt ist.

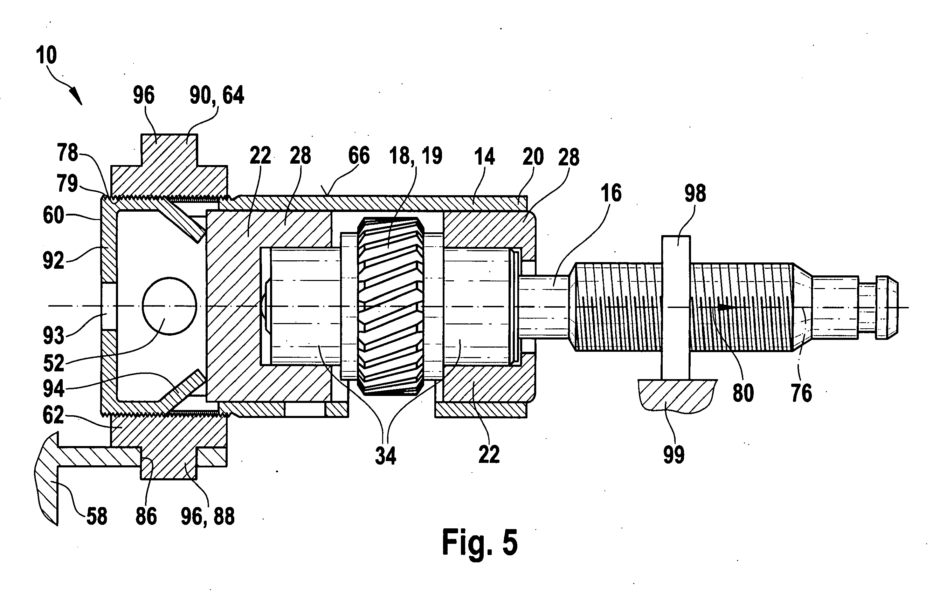

Figur 5 zeigt ein weiteres Ausführungsbeispiel einer erfindungsgemäßen Getriebe-Antriebseinheit 10, bei dem das Trägerrohr 14 an einem Ende 60 eine weitgehend geschlossene Bodenfläche 92 aufweist. In der Bodenfläche 92 ist beispielsweise eine Montageöffnung 93 ausgebildet, um die zuverlässige Lagerung der Spindel 16 im Lagerschild 28 zu erleichtern. Im Trägerrohr 14 sind des weiteren Stemmlasten 94 eingedrückt, an den axial das Lagerschild 28 mit der topfförmigen Lageraufnahme 22 anliegt. Am Ende 20, an dem die Spindel 16 aus dem Trägerrohr 14 ragt, ist bei dieser Ausführung ein zweites separates Lagerschild 28 mit einer topfförmigen Lageraufnahme 22 im Trägerrohr 14 angeordnet. Im Trägerrohr 14 ist direkt eine Aufnahme 52 für eine Befestigungsvorrichtung 54 angeformt, die als radiale Bohrung ausgebildet ist. Hierbei stellt die Aufnahme 52 eine Standard-Schnittstelle zum Kunden dar, die jedoch mittels des Aufnahmemoduls 90 in eine kundenspezifische, individuelle Aufnahme 88 abgeändert werden kann. Hierzu ist das Aufnahmemodul 90 als Außenring 64 ausgebildet, der auf der äußeren Umfangsfläche 66 des Trägerrohrs 14 angeordnet ist. Das Aufnahmemodul 90 weist ein Innengewinde 78 auf, das in das als Außengewinde ausgebildete Gegengewinde 79 des Trägerrohrs 14 greift. Das Aufnahmemodul 90 überdeckt die radialen Ausschnitte, die durch die Aufnahme 52 und die Verstemmlasten 94 im Trägerrohr 14 eingeschnitten sind. Das Aufnahmemodul 90 übernimmt bei dieser Ausführung gleichseitig die Funktion eines Stützelements 62, das die Festigkeit des Trägerrohrs s14 in dessen Endbereich 60 erhöht. Das Aufnahmemodul 90 weist als Aufnahme 88 einen zylindrischen Bolzen 96 auf, der sich radial nach außen erstreckt. Dieser zylindrische Bolzen 96 entspricht einer Integration des als Befestigungsvorrichtung 54 ausgebildeten Gelenkbolzen 55 in Figur 2. Somit kann auf dieser Aufnahme 88 beispielsweise direkt das zu verstellenden Teil 58 über daran angeformte Augen 86 mit dem Spindelantrieb 10 verbunden werden. Treten bei einem Unfall Crash-Kräfte auf, die aufgrund der Trägheit des zu verstellenden Teils 58 auf dieses einwirken, werden diese Kräfte über die Aufnahme 88 des Aufnahmemoduls 90 auf das Trägerrohr 14 übertragen. Die Spindel 16 wird beispielsweise über eine Gewindemutter 98 fest an der Karosserie 99 gehalten, sodass in der Spindel 16 die Gegenkraft 80 wirkt, um das zu verstellenden Teil 58 in seiner bestimmungsgemäßen Position zu halten. Bei herkömmlichen Spindelantrieben stellt das Getriebegehäuse das größte Risiko dar, da bei dessen Bruch das zu verstellende Teil 58 sich von der Spindel 16 löst. Bei der erfindungsgemäßen Getriebe-Antriebseinheit 10 werden die Crash-Kräfte jedoch sicher vom Trägerrohr 14 aufgenommen, ohne dass die Kräfte auf das Antriebsaggregat 42 oder dessen Abtriebselement 40 einwirken. Durch das erfindungsgemäße Aufnahmemodul 90 werden die Crash-Kräfte sicher vom Verstell-Teil 58 auf das Trägerrohr 14 und über die Spindel 16 auf die Karosserie 99 übertragen.

Es sei angemerkt, dass hinsichtlich der in den Figuren gezeigten Ausführungsbeispiele und der Beschreibung vielfältige Kombinationsmöglichkeiten der einzelnen Merkmale untereinander möglich sind. So kann beispielsweise das Trägerrohr 14 in unterschiedlichen Verfahren hergestellt werden und unterschiedliche konkrete Ausformungen aufweisen. Anstatt eine angeformten topfförmigen Lageraufnahme 22 kann das Trägerrohr 14 auch als glattes Zylinderrohr ausgebildet sein, in das zwei separate Lagerschilde 28 für die Lagerung der Spindel 16 angeordnet werden. Die Spindel 16 wird vorzugsweise über das darauf gelagerte Antriebsrad 18 gelagert, kann in einer Variation aber auch mittels Lagerflächen gelagert werden, die direkt an der Spindel 16 angeformt sind. Die Momentübertragung vom Antriebsaggregat 42 ist nicht auf ein Schneckengetriebe 19, 39 beschränkt, sondern kann beispielsweise auch mittels eines Stirnradgetriebes übertragen werden. Die konkrete Form und Materialauswahl des Aufnahmemoduls 90 wird entsprechend der Festigkeitsanforderung gewählt, wobei nach Bedarf das Aufnahmemodul gleichzeitig eine Stützfunktion für das Trägerrohr übernehmen kann. Der Querschnitt des Trägerrohrs 14 ist nicht auf einen Kreis beschränkt, jedoch kann das Aufnahmemodul 90 bei einer zylindrischen Ausbildung des Trägerrohrs 14 einfach auf oder eingeschraubt werden.

## Patentansprüche

1. Getriebe-Antriebseinheit (10), insbesondere zum Verstellen eines beweglichen Teils (58) im Kraftfahrzeug, mit einem mittels eines Antriebsaggregats (42) antreibbaren Antriebsrad (18), das auf einer Spindel (16) angeordnet ist, und das Antriebsrad (18) drehbar in einem Trägerrohr (14) gelagert ist, wobei am Trägerrohr (14) ein nachträglich, separat montierbares Aufnahmemodul (90) befestigbar ist, das eine Aufnahme (88) für eine Befestigungsvorrichtung (44) am Kraftfahrzeug (99) oder dem zu verstellenden Teil (58) aufweist, **dadurch gekennzeichnet, dass** das Aufnahmemodul (90) an einer äußeren Umfangsfläche (66) und/oder einer inneren Wandfläche (70) des Trägerrohrs (14) anliegt.

2. Getriebe-Antriebseinheit (10) nach Anspruch 1, **dadurch gekennzeichnet, dass** das Aufnahmemodul (90) an einem axialen Ende (60) des Trägerrohrs (14) anliegt.

3. Getriebe-Antriebseinheit (10) nach einem der Ansprüche 1 oder 2, **dadurch gekennzeichnet, dass** das Aufnahmemodul (90) kreis- oder ringförmig ausgebildet ist, und insbesondere im montierten Zustand von der Spindel (16) durchdrungen wird.

4. Getriebe-Antriebseinheit (10) nach einem der vorhergehenden Ansprüche, **dadurch gekennzeichnet, dass** das Aufnahmemodul (90) mittels eines - insbesondere selbstschneidenden - Gewindes (78) mit dem Trägerrohr (14) verbindbar ist.

5. Getriebe-Antriebseinheit (10) nach einem der vorhergehenden Ansprüche, **dadurch gekennzeichnet, dass** das Aufnahmemodul (90) mittels Kleben, Schweißen oder plastischer Materialumformung mit dem Trägerrohr (14) verbindbar ist.

6. Getriebe-Antriebseinheit (10) nach einem der vorhergehenden Ansprüche, **dadurch gekennzeichnet, dass** das Material - insbesondere gehärteter Stahl des Aufnahmemoduls (90) eine höhere Festigkeit aufweist, als des Material des Trägerrohrs (14), das insbesondere als metallisches Tiefziehteil gefertigt ist.

7. Getriebe-Antriebseinheit (10) nach einem der vorhergehenden Ansprüche, **dadurch gekennzeichnet, dass** die Aufnahme (88) als Anschraub-Auge (86) ausgebildet ist, in das als Befestigungselement (54) ein Befestigungsbolzen (55) oder eine Befestigungsniete der Karosserie (99) oder des zu verstellenden Teils (58) einfügbar ist.

8. Getriebe-Antriebseinheit (10) nach einem der vorhergehenden Ansprüche, **dadurch gekennzeichnet, dass** die Aufnahme (88) als zylindrischer Bolzen (96) ausgebildet ist, der sich radial zur Spindel (16) erstreckt.

9. Getriebe-Antriebseinheit (10) nach einem der vorhergehenden Ansprüche, **dadurch gekennzeichnet, dass** das Aufnahmemodul (90) nach dessen Montage axial an einem Lagerschild (28) anliegt, mit dem das Antriebsrad (18) axial und/oder radial im Trägerrohr (14) gelagert ist.

10. Getriebe-Antriebseinheit (10) nach einem der vorhergehenden Ansprüche, **dadurch gekennzeichnet, dass** das Aufnahmemodul (90) als Lagerschild (28) für die Spindel (16) ausgebildet ist und nach dessen Montage insbesondere axial direkt an der Spindel (16) anliegt, wobei das Aufnahmemodul (90) vorzugsweise aus Kunststoff gefertigt ist.

11. Getriebe-Antriebseinheit (10) nach einem der vorhergehenden Ansprüche, **dadurch gekennzeichnet, dass** das Aufnahmemodul (90) als Stützelement (62) ausgebildet ist, das zum Ableiten von Crash-Kräften die mechanische Festigkeit des Trägerrohrs (14) erhöht.

12. Getriebe-Antriebseinheit (10) nach einem der vorhergehenden Ansprüche, **dadurch gekennzeichnet, dass** das Antriebsaggregat (42) mittels einer Kopplungsvorrichtung (44) mit dem Trägerrohr (14) verbunden ist, das für den Eingriff des Abtriebelements (40) in das Antriebrad (18) eine radiale Aussparung (50) aufweist.

13. Verfahren zur Herstellung einer Getriebe-Antriebseinheit (10) nach einem der vorhergehenden Ansprüche, **dadurch gekennzeichnet, dass** zuerst die Spindel (16) mit dem Antriebsrad (18) in das Standard-Trägerrohr (14) als separate Baueinheit (12) montiert wird, und anschließend das kundenspezifische Aufnahmemodul (90) am Trägerrohr (14) befestigt wird, wobei das Aufnahmemodul (90) an einer äußeren Umfangsfläche (66) und/oder einer inneren Wandfläche (70) des Trägerrohrs (14) anliegt.

14. Verfahren nach Anspruch 13, **dadurch gekennzeichnet, dass** bei der Montage des Aufnahmemoduls (90) dieses mit einer beliebigen Winkelposition gegenüber der Umfangsrichtung des Trägerrohrs (14) verdreht werden kann, bevor das Aufnahmemodul (90) kraft-/oder formschlüssig gegenüber dem Trägerrohr (14) fixiert wird.

15. Verfahren nach einem der Ansprüche 13 oder 14, **dadurch gekennzeichnet dass** an die vormontierte separate Trägerrohr-Baueinheit (12) das Antriebsaggregat (42) mittels eines Kopplungselements (44) befestigt wird.

## Claims

1. Transmission drive unit (10), in particular for adjusting a mobile part (58) in a motor vehicle, having a drive input wheel (18) which can be driven by means of a drive assembly (42) and which is arranged on a spindle (16), and the drive input wheel (18) is rotatably mounted in a support tube (14), with it being possible for a receiving module (90), which can be retroactively mounted separately, to be fastened to the support tube (14), which receiving module (90) has a receptacle (88) for a fastening device (44) on the motor vehicle (99) or the part (58) to be adjusted, **characterized in that** the receiving module (90) bears against an outer circumferential surface (66) and/or an inner wall surface (70) of the support tube (14).

2. Transmission drive unit (10) according to Claim 1, **characterized in that** the receiving module (90) bears against an axial end (60) of the support tube (14).

3. Transmission drive unit (10) according to one of Claims 1 or 2, **characterized in that** the receiving module (90) is of circular or annular design, and in particular, the spindle (16) extends through said receiving module (90) in the assembled state.

4. Transmission drive unit (10) according to one of the preceding claims, **characterized in that** the receiving module (90) can be connected to the support tube (14) by means of a - in particular self-tapping - thread (78).

5. Transmission drive unit (10) according to one of the preceding claims, **characterized in that** the receiving module (90) can be connected to the support tube (14) by means of adhesive bonding, welding or plastic material deformation.

6. Transmission drive unit (10) according to one of the preceding claims, **characterized in that** the material - in particular hardened steel - of the receiving module (90) has a higher strength than the material of the support tube (14), which is produced in particular as a metallic deep-drawn part.

7. Transmission drive unit (10) according to one of the preceding claims, **characterized in that** the receptacle (88) is formed as a screw-on lug (86) into which can be inserted, as a fastening element (54), a fastening bolt (55) or a fastening rivet of the body (99) or of the part (58) to be adjusted.

8. Transmission drive unit (10) according to one of the preceding claims, **characterized in that** the receptacle (88) is designed as a cylindrical bolt (96) which extends radially with respect to the spindle (16).

9. Transmission drive unit (10) according to one of the preceding claims, **characterized in that** the receiving module (90), after being assembled, bears axially against a bearing shield (28) by means of which the drive input wheel (18) is mounted axially and/or radially in the support tube (14).

10. Transmission drive unit (10) according to one of the preceding claims, **characterized in that** the receiving module (90) is designed as a bearing shield (28) for the spindle (16) and, after being assembled, bears in particular axially directly against the spindle (16), with the receiving module (90) preferably being produced from plastic.

11. Transmission drive unit (10) according to one of the preceding claims, **characterized in that** the receiving module (90) is designed as a support element (62) which increases the mechanical strength of the support tube (14) for the dissipation of crash forces.

12. Transmission drive unit (10) according to one of the preceding claims, **characterized in that** the drive assembly (42) is connected by means of a coupling device (44) to the support tube (14) which has a radial cutout (50) for the engagement of the drive output element (40) into the drive input wheel (18).

13. Method for producing a transmission drive unit (10) according to one of the preceding claims, **characterized in that** firstly the spindle (16) with the drive input wheel (18) is mounted into the standard support tube (14) as a separate structural unit (12), and the customer-specific receiving module (90) is subsequently fastened to the support tube (14), with the receiving module (90) bearing against an outer circumferential surface (66) and/or an inner wall surface (70) of the support tube (14).

14. Method according to Claim 13, **characterized in that**, during the assembly of the receiving module (90), the latter can be rotated into any desired angular position with respect to the circumferential direction of the support tube (14) before the receiving module (90) is fixed in a non-positively locking or positively locking fashion with respect to the support tube (14).

15. Method according to one of Claims 13 or 14, **characterized in that** the drive assembly (42) is fastened by means of a coupling element (44) to the pre-assembled separate support tube structural unit (12).

## Revendications

1. Unité d'entraînement et de transmission (10), en particulier pour déplacer une partie mobile (58) dans un véhicule automobile, comprenant une roue d'entraînement (18) pouvant être entraînée au moyen d'un groupe d'entraînement (42), qui est disposée sur une broche (16), la roue d'entraînement (18) étant montée à rotation dans un tube porteur (14), un module de réception (90) pouvant être monté séparément ultérieurement pouvant être fixé sur le tube porteur (14) et présentant un logement (88) pour un dispositif de fixation (44) sur le véhicule automobile (99) ou la partie mobile (58), **caractérisée en ce que** le module de réception (90) s'applique contre une surface périphérique extérieure (66) et/ou une surface de paroi intérieure (70) du tube porteur (14).

2. Unité d'entraînement et de transmission (10) selon la revendication 1, **caractérisée en ce que** le module de réception (90) s'applique contre une extrémité axiale (60) du tube porteur (14).

3. Unité d'entraînement et de transmission (10) selon l'une quelconque des revendications 1 ou 2, **caractérisée en ce que** le module de réception (90) est réalisé sous forme circulaire ou annulaire, et est en particulier traversé par la broche (16) dans l'état monté.

4. Unité d'entraînement et de transmission (10) selon l'une quelconque des revendications précédentes, **caractérisée en ce que** le module de réception (90) peut être connecté au tube porteur (14) au moyen d'un filetage (78) notamment auto-taraudeur.

5. Unité d'entraînement et de transmission (10) selon l'une quelconque des revendications précédentes, **caractérisée en ce que** le module de réception (90) peut être connecté au tube porteur (14) au moyen d'un collage, soudage ou formage de matière plastique.

6. Unité d'entraînement et de transmission (10) selon l'une quelconque des revendications précédentes, **caractérisée en ce que** le matériau du module de réception (90), en particulier de l'acier trempé, présente une plus grande solidité que le matériau du tube porteur (14) qui est notamment fabriqué sous forme de pièce métallique emboutie profond.

7. Unité d'entraînement et de transmission (10) selon l'une quelconque des revendications précédentes, **caractérisée en ce que** le logement (88) est réalisé sous forme d'oeillet de vissage (86) dans lequel peut être inséré, en tant qu'élément de fixation (54), un boulon de fixation (55) ou un rivet de fixation de la carrosserie (99) ou de la partie mobile (58).

8. Unité d'entraînement et de transmission (10) selon l'une quelconque des revendications précédentes, **caractérisée en ce que** le logement (88) est réalisé sous forme de boulon cylindrique (96) qui s'étend radialement par rapport à la broche (16).

9. Unité d'entraînement et de transmission (10) selon l'une quelconque des revendications précédentes, **caractérisée en ce que** le module de réception (90), après son montage, s'applique axialement contre une plaque formant palier (28), avec laquelle la roue d'entraînement (18) est montée axialement et/ou radialement dans le tube porteur (14).

10. Unité d'entraînement et de transmission (10) selon l'une quelconque des revendications précédentes, **caractérisée en ce que** le module de réception (90) est réalisé sous forme de plaque formant palier (28) pour la broche (16) et après son montage, s'applique notamment axialement directement contre la broche (16), le module de réception (90) étant fabriqué de préférence en plastique.

11. Unité d'entraînement et de transmission (10) selon l'une quelconque des revendications précédentes, **caractérisée en ce que** le module de réception (90) est réalisé sous forme d'élément de support (62) qui augmente la solidité mécanique du tube porteur (14) pour dévier les forces de collision.

12. Unité d'entraînement et de transmission (10) selon l'une quelconque des revendications précédentes, **caractérisée en ce que** le groupe d'entraînement (42) est connecté au moyen d'un dispositif d'accouplement (44) au tube porteur (14) qui présente un évidement radial (50) pour l'engagement de l'élément de sortie (40) dans la roue d'entraînement (18).

13. Procédé de fabrication d'une unité d'entraînement et de transmission (10) selon l'une quelconque des revendications précédentes, **caractérisé en ce que** tout d'abord, la broche (16) est montée avec la roue d'entraînement (18) dans le tube porteur standard (14) en tant qu'unité constructive séparée (12), puis le module de réception spécifique au client (90) est fixé sur le tube porteur (14), le module de réception (90) s'appliquant contre une surface périphérique extérieure (66) et/ou une surface de paroi intérieure (70) du tube porteur (14).

14. Procédé selon la revendication 13, **caractérisé en ce que**, lors du montage du module de réception (90), celui-ci peut être tourné avec une position angulaire quelconque par rapport à la direction périphérique du tube porteur (14), avant que le module de réception (90) soit fixé par engagement par force et/ou par correspondance géométrique par rapport au tube porteur (14).

15. Procédé selon l'une quelconque des revendications 13 ou 14, **caractérisé en ce que** l'on fixe sur l'unité constructive du tube porteur prémontée séparée (12), le groupe d'entraînement (42) au moyen d'un élément d'accouplement (44).
